# EUROPÄISCHE PATENTSCHRIFT

(11) **EP 0 503 113 B1**
(45) Veröffentlichungstag und Bekanntmachung des Hinweises auf die Patenterteilung: **02.08.1995**
(21) Anmeldenummer: 91103854.5
(22) Anmeldetag: 13.03.1991
(51) Int. Cl.: F16L 58/18, B29C 63/34, F16L 23/12

(54) **Verfahren zum Auskleiden eines Messrohrs eines Durchflussmessgeräts**
Process for coating a measuring pipe of a flow meter
Procédé pour revêtir un tube de mesure d'un débitmètre

(43) Veröffentlichungstag der Anmeldung: 16.09.1992
(73) Patentinhaber: Fischer & Porter GmbH, D-37079 Göttingen (DE)
(72) Erfinder: Meier, Dieter, W-3400 Göttingen (DE)
(74) Vertreter: Fincke, Karl Theodor, Dipl.-Phys. Dr.

(56) Entgegenhaltungen:
- DE-C- 827 550
- US-A- 3 047 937
- US-A- 3 435 853
- US-A- 4 191 305

## Beschreibung

Die Erfindung betrifft ein Verfahren zum Auskleiden eines Meßrohrs eines Durchflußmeßgeräts mit einer mit dem Meßstoff in Berührung kommenden, schlauchförmigen Auskleidung aus thermoplastischem Material, insbesondere PTFE oder PFA, deren Enden um Endflansche des Meßrohrs zu bördeln sind.

Bei einem bekannten Verfahren dieser Art werden die Enden der schlauchförmigen Auskleidung unter Erwärmung auf Dichtungsleisten umgebördelt, die sich auf den Stirnflächen der Endflansche befinden und das Meßrohr ringförmig umschließen. Nach dem Umbördeln haben die umgebördelten Enden der Auskleidung das Bestreben, sich wieder der ursprünglichen Schlauchform zu nähern, was zur Folge hat, daß sie sich von den Dichtungsleisten lösen. Dies führt vielfach beim Einbau des Meßrohrs zu Beschädigungen.

Aus der DE-C-827 550 ist ein Verfahren zur Herstellung eines rohrförmigen Einsatzes aus Polyethylen für ein Dampfkondensrohr bekannt, bei dem ein Kunststoffrohr zuerst auf ein richtiges Maß gebracht wird, indem man das Rohr auf einen Dorn aufsetzt und wenigstens ein Werkzeug darüberzieht, worauf dann das so auf Maß gebrachte Rohr teilweise in einen rohrförmigen Halter eingeführt und der Halter in Umdrehung versetzt wird, während man einen aus dem Halter vorstehenden Abschnitt des Rohrs auf eine Temperatur erhitzt, bei der dieser Abschnitt plastisch wird und durch Zentrifugalkraft nach außen getrieben wird, so daß an seinem äußeren Ende ein Flansch gebildet wird. Anschließend wird der äußere Umfang des Flansches in eine Ringschulter des Halters nach rückwärts umgebogen, so daß das äußere Ende des Abschnitts einen ringförmigen Rand bildet. Ist dies geschehen, so wird das Rohr aus dem Halter gezogen und kann dann als Einsatz in ein Dampfkondensrohr gesteckt werden.

Aus der US-A-3 435 853 ist es bekannt, ein mit einem Endflansch versehenes Rohr mit einer Auskleidung aus Tetrafluorethylen zu versehen, die sich bis über den Umfang des Flansches mit Lappen erstreckt, die aus dem Ende der Auskleidung ausgeschnitten sind. Die noch nicht in Lappen unterteilte Auskleidung endet auf der Stirnfläche des Flansches und läßt Bolzenlöcher frei. Zwischen der Stirnseite des Flansches und der den Flansch bedeckenden Auskleidung befindet sich eine Dichtung. Hinterschneidungen im Umfang des Flansches sind nicht vorgesehen. Die Lappen sind über den Umfang des Flansches gezogen, also nicht angeschrumpft.

Aus der US-A-3 047 937 ist eine Rohrverbindung bekannt, bei der zwei einander zugewandte Enden von Rohren konisch ausgebildet und mit einer Auskleidung versehen sind. Zwischen den so ausgekleideten Enden der Rohre befindet sich ein entsprechend konisches, mit einer Schutzschicht versehenes Einsatzteil. Die beiden Rohrenden werden gegen das Einsatzteil mit Überwurfmuttern zusammengezogen.

Aufgabe der Erfindung ist es, ein Verfahren nach dem Oberbegriff des Anspruchs 1 anzugeben, das zur Folge hat, daß sich die umgebördelten Enden der schlauchförmigen Auskleidung nicht nach der Umbördelung von den Endflanschen lösen.

Zur Lösung dieser Aufgabe ist das Verfahren eingangs genannter Art dadurch gekennzeichnet, daß die Enden der schlauchförmigen Auskleidung durch Erwärmung plastifiziert, dann um mehr als 90° aufgeweitet und dann durch Abkühlen und Schrumpfen in Hinterschneidungen an den Stirnseiten der Endflansche gebördelt werden.

Dadurch, daß die Enden der schlauchförmigen Auskleidung nach Plastifizierung durch Erwärmung um mehr als 90° aufgeweitet werden, entstehen in den Enden Ringkräfte, die beim Erkalten der Enden das Schrumpfen der Enden um die nicht aufgeweiteten Bereiche der schlauchförmigen Auskleidung zur Folge haben.

Nimmt man dann das Umbördeln in Hinterschneidungen an den Stirnseiten der Endflansche vor, können sich die Enden der schlauchförmigen Auskleidung nicht mehr von den Endflanschen lösen.

Besonders geeignete Ausbildungen der Hinterschneidungen sind in den Ansprüchen 2 bis 5 angegeben.

Eine besonders hohe Festigkeit des Sitzes der umgebördelten Enden erhält man nach Anspruch 6.

Die Erfindung wird im folgenden an Ausführungsbeispielen unter Hinweis auf die beigefügten Zeichnungen beschrieben.
- Fig. 1: erläutert den Vorgang des Aufweitens um mehr als 90°.
- Fig. 2: zeigt eine erste Ausführungsform einer Umbördelung.
- Fig. 3: zeigt eine zweite Ausführungsform mit einer zusätzlichen Sicherung der Umbördelung.

Die Figuren 4, 5 und 6 zeigen unterschiedliche Hinterschneidungen.

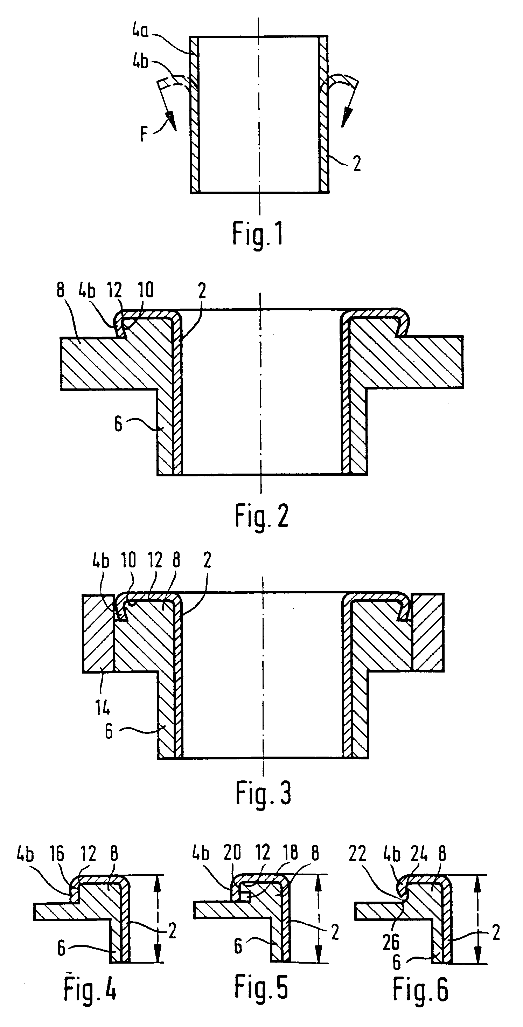

Fig. 1 zeigt einen Endabschnitt einer schlauchförmigen Auskleidung 2 mit einem noch nicht aufgeweiteten Ende 4a und einem um mehr als 90° aufgeweiteten Ende 4b. Bei der Erkaltung des aufgeweiteten Endes 4b entstehen Kräfte in Pfeilrichtung F, die für den sicheren Sitz einer Umbördelung sorgen.

Fig. 2 zeigt einen Endbereich eines Meßrohrs 6 mit einem Endflansch 8, der eine spitzwinklige Hinterschneidung 10 aufweist. Die äußere Kante 12 der Hinterschneidung 10 ist abgerundet. Das Ende 4b nach Fig. 1 ist in die Hinterschneidung 10 hineingebördelt.

Bei der Ausführungsform nach Fig. 3 schließt der Endflansch 8 radial mit der Hinterschneidung 10 ab, so daß gerade das umgebördelte Ende 4b der schlauchförmigen Auskleidung 2 in der Hinterschneidung 10 Platz hat. Zur zusätzlichen Sicherung des Endes 4b ist der Endflansch 8 von einer ringförmigen Fassung 14 umschlossen, die das Ende 4b der schlauchförmigen Auskleidung 2 in die Hinterschneidung 10 drückt.

Fig. 4 zeigt eine rechtwinklige Hinterschneidung 16 des Endflansches 8.

Fig. 5 zeigt eine nach innen gerichtete Ringnut 18, in der eine Hinterschneidung 20 endet.

Fig. 6 zeigt eine im wesentlichen spitzwinklige Hinterschneidung 22, deren äußere Kante 24 und deren innere Kante 26 abgerundet sind.

## Patentansprüche

1. Verfahren zum Auskleiden eines Meßrohrs (6) eines Durchflußmeßgeräts mit einer mit dem Meßstoff in Berührung kommenden, schlauchförmigen Auskleidung (2) aus thermoplastischem Material, insbesondere PTFE oder PFA, deren Enden (4b) um Endflansche (8) des Meßrohrs (2) zu bördeln sind,
**dadurch gekennzeichnet,**
daß die Enden (4b) der schlauchförmigen Auskleidung (2) durch Erwärmung plastifiziert, dann um mehr als 90° aufgeweitet und dann durch Abkühlen und Schrumpfen in Hinterschneidungen (10, 16, 20, 22) an den Stirnseiten der Endflansche (8) gebördelt werden.

2. Verfahren nach Anspruch 1, dadurch gekennzeichnet, daß wenigstens die äußeren Kanten (12, 24, 26) der Hinterschneidungen (10, 16, 20, 22) abgerundet sind.

3. Verfahren nach Anspruch 1 oder 2,
dadurch gekennzeichnet, daß die Hinterschneidungen (10, 22) spitzwinklig sind.

4. Verfahren nach Anspruch 1 oder 2,
dadurch gekennzeichnet, daß die Hinterschneidungen (16, 22) rechtwinklig sind.

5. Verfahren nach einem der vorhergehenden Ansprüche,
dadurch gekennzeichnet, daß die Hinterschneidungen (20) radial nach innen gerichtete Ringnuten (18) aufweisen.

6. Verfahren nach einem der vorhergehenden Ansprüche,
dadurch gekennzeichnet, daß die in die Hinterschneidungen (10, 16, 20, 22) gebördelten Endbereiche (4a) der Auskleidung (2) mittels Fassungsringen (14) umschlossen werden.

## Claims

1. A process for lining a measuring tube (6) of a flow-measuring apparatus with a tubular lining (2), which comes into contact with the measured medium, is made of thermoplastic material, more particularly PTFE or PFA, and whose ends (4b) are to be flanged around end flanges (8) of the measuring tube (2), characterised in that the ends (4b) of the tubular lining (2) are plasticised by heating, then expanded by more than 90° and thereafter flanged by cooling and shrinking in undercuts (10, 16, 20, 22) on the end faces of the end flanges (8).

2. A process according to claim 1, characterised in that at least the outer edges (12, 24, 26) of the undercuts (10, 16, 20, 22) are rounded.

3. A process according to claim 1 or 2, characterised in that the undercuts (10, 22) are acute-angled.

4. A process according to claim 1 or 2, characterised in that the undercuts (16, 22) are right-angled.

5. A process according to one of the preceding claims, characterised in that the undercuts (20) have radially inwardly oriented annular grooves (18).

6. A process according to one of the preceding claims, characterised in that the end regions (4a) of the lining (2), which are flanged in undercuts (10, 16, 20, 22) are enclosed by means of retaining rings (14).

## Revendications

1. Procédé pour revêtir un tube de mesure (6) d'un débitmètre avec un revêtement (2) en forme de tuyau, venant en contact avec le matériau à mesurer et réalisé en matière thermoplastique, notamment en PTFE ou en PFA, dont les extrémités (4b) sont à rabattre autour des collerettes d'extrémité (8) du tube de mesure (6).
caractérisé en ce que les extrémités (4b) du revêtement (2) en forme de tuyau sont plastifiées par chauffage, puis élargies de plus de 90°C, et enfin rabattues par refroidissement et par frettage dans des contre-dépouilles (10, 16, 20, 22) au niveau des surfaces frontales des collerettes d'extrémité (8).

2. Procédé selon la revendication 1, caractérisé en ce que au moins les arêtes extérieures (12, 24, 26) des contre-dépouilles (10, 16, 20, 22) sont arrondies.

3. Procédé selon la revendication 1 ou 2, caractérisé en ce que les contre-dépouilles (10, 22) sont à angle aigu.

4. Procédé selon la revendication 1 ou 2, caractérisé en ce que les contre-dépouilles (16, 20) sont à angle droit.

5. Procédé selon l'une quelconque des revendications précédentes, caractérisé en ce que les contredépouilles (20) présentent radialement des gorges annulaires (18) dirigées vers l'intérieur.

6. Procédé selon l'une quelconque des revendications précédentes, caractérisé en ce que les zones terminales rabattues (40) du revêtement (2) sont entovrées dans les contre-dépouilles (10, 16, 20, 22) au moyen de viroles (14).
